# EUROPEAN PATENT APPLICATION

(11) **EP 1 324 222 A2**
(43) Date of publication of application: **02.07.2003**
(21) Application number: 02023136.1
(22) Date of filing: 15.10.2002
(51) Int. Cl.: G06F 17/30

(54) **Multimedia data searching and browsing system**

(30) Priority: 29.12.2001 KR 2001088258
(71) Applicant: LG ELECTRONICS INC., Seoul (KR)
(72) Inventor: Kim, Joo Min, Seoul (KR); Kim, Heon Jun, Seongnam-si, Gyeonggi-do (KR); Park, Ki Su, Seoul (KR)
(74) Representative: Vetter, Ewald Otto

(57) **Abstract**

There are provided a system for automatically generating a multimedia data description scheme (DS), and a system for searching and browsing the multimedia data based on the multimedia data description scheme (DS), the generating system providing the information to describe the multimedia data, and the browsing system allowing to search and browse the desired data by a user based on the multimedia data description scheme (DS), and including DDL parsing means, binary format decoding means, data storage means, browser interface means, and so on.

## Description

### BACKGROUND OF THE INVENTION

### Field of the Invention

The present invention relates to an apparatus of generating information to describe multimedia data, and an apparatus of searching and browsing multimedia data based on multimedia data description scheme.

### Discussion of the Related Art

The amount of media faced in everyday life is greatly increased with the technological development of the mass media and the easy formation of its contents. With a large amount of multimedia contents, there is increased a need of an automatic system for sorting and supplying data which a user requires, and accordingly, there is actively developed a study to solve the above need.

Particularly, in accordance with the development of a digital technology for a multimedia, video contents are stored and circulated in the form of digital, and once a digital broadcast is popularized, digitalization of media will become accelerated.

In digital video contents, a user may want to see only sports news in normal news programs, or another user may want to see only stock-related news. Or, a third one may desire to see only specific scenes in TV programs where his or her favorite person appears. Therefore, many efforts are being made in various ways to accommodate the above various requirements.

Moreover, there may be a user who wants to grasp the whole contents of the video within a limited time quickly. This is called "highlight" which may require the above need. Generally, the highlight can be understood as a newly-structured content formed by collecting and reorganizing the all important scenes in the video contents and it can be met through "sport highlight", "movie preview", "headline news", and so on. However, in the matter of automation, the extraction of highlight from video contents is a difficult field to automatize even by current technologies. Therefore, most of people normally depend on the manual operation. However, a great increase of the media makes it more difficult and even hardly possible to supply the highlight for the almost all video contents by the manual operation because it requires lots of human resources. Therefore, there is required the development of the automation system which enables users to catch the whole contents briefly within a short time.

With the development of the digital technology, a key frame is utilized as a tool to make a user move to a desired position in video contents. Once employing a video summary by using the key frame, the user can move to the desired position more quickly.

Recently, video indexing technology is being studied as a tool to find a desired scene in a digital video. To find the only scenes including a specific person in the video and recognize the person in the video, a study of indexing the information of the entrance of the person, or extracting and indexing important scenes in movies or sports games, etc. is being developed.

As described above, with the development of digital video technologies and image/video recognizing technologies, users can do searching/filtering and browsing only the portion desired in the video.

The most essential technologies for non-linear video browsing and searching are a shot segmentation and a shot clustering, and these two technologies are the essence of video analysis.

The shot means a sequence of video frames achieved from one camera without interruption, and is the most basic unit to analyze or construct a video.

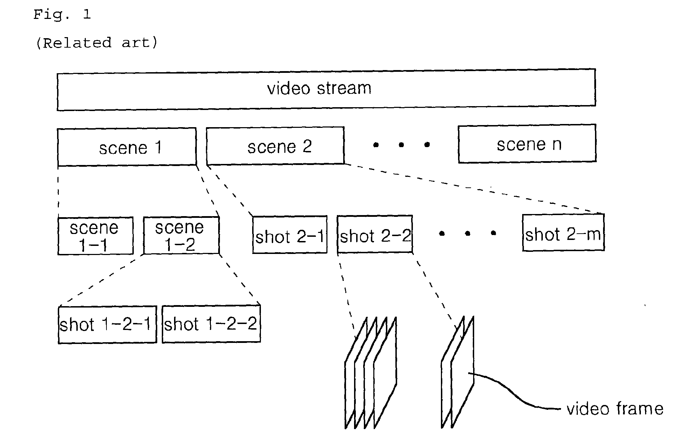

Generally, a video consists of the connections of a number of shots. The shot segmentation is the technique to divide a video into an individual shot. Fig. 1 is a diagram to show the process of the shot segmentation. In most of the shot segmentation algorism, there is generally a close resemblance in one single shot in the aspect of image, motion, and audio, and on the contrary, there is generally a non-resemblance in two shots in the aspect of image, motion, and audio.

Generally, the video highlight is the method to select important segments in reality in the contents of video stream, and to replay the segments sequentially.

In addition, a video has a scene as a component in meaning, that is, the scene is a component which divides the video in its meaning in view of the development of the story or the video structure. Generally, there are many shots in one single scene. The concepts of the shot and scene can be also applied to those of an audio program in the same way.

The multimedia content indexing technique has an object to allow a user to easily search and browse the desired portions, which is operated by extracting a structural information in a unit of shot/scene existing in a content, selecting an important and characteristic component such as a key frame to represent the segment in each structural unit, indexing a structural information for the multimedia content, and indexing by a way of describing the occurrence of events, the entrance of an audio visual object, the information in meaning of the state of objects and background (places, etc.), and so on in a time axis.

On the other hand, to offer an efficient video searching and browsing, there is developed studies of extracting a main text portion or a news icon or a human face portion, etc. to present the information in meaning in video streams, and there is also introduced a method of manipulating these key portions and extracting a new key frame.

In the manipulated key frame, a key portion or a key frame to represent a segment such as a scene or a shot, etc. is extracted, and by using the extracted key portion or the key frame, it can be made into one image, and the manipulated image is offered as means to represent the content of the corresponding segment. By using the manipulated key frame, a large amount of information can be intensively expressed in a small display area so that the user can catch and understand the content of a specific portion more fast and more easily, and can also enjoy watching the concerned portion alone which he or she selects.

As described above, a multimedia data description scheme (DS) is described based on the contents of a multimedia data, a key frame, or a text, etc. for an efficient searching and browsing. The description scheme (DS) includes the information to describe the meaning of a multimedia data, the information to describe the architectural structure of a multimedia data, and so on. If the multimedia data is a moving images data, and provides a summary (highlight) function based on the key frame, the key frame to represent a specific portion, and the information on the portion to be searched and displayed by the key frame will be described as a description scheme (DS).

Therefore, there are required a system of generating a description scheme (DS) to describe multimedia data to provide an easier and more efficient searching and browsing process for the multimedia data, and a system of browsing the multimedia data based on the generated description scheme.

### SUMMARY OF THE INVENTION

Accordingly, the present invention is directed to a system for automatically generating a multimedia data description scheme (DS), and a multimedia browsing system for searching and browsing the multimedia data based on the multimedia data description scheme (DS) that substantially obviate one or more problems due to limitations and disadvantages of the related art.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an automatic generating apparatus of multimedia data description scheme may include user interface means for generating a multimedia data description scheme, data interface means for data interface between the user interface means and the apparatus, DDL conversion and generation means for generating a DDL type of description scheme for a predetermined multimedia data selected by the user interface means, binary format conversion and generation means for generating a binary format (BiM) of description scheme for a predetermined multimedia data selected by the user interface means, DDL parsing means for parsing the DDL type of description scheme and supplying to the data interface means, and binary format decoding means for decoding the binary format of description scheme and supplying to the data interface means.

In another aspect of the present invention, a multimedia data searching and browsing apparatus may include DDL parsing means for parsing a DDL type of description scheme for multimedia data browsing described as a DDL type of description scheme, binary format decoding means for decoding a binary format of description scheme for multimedia data browsing described as a binary format of description scheme, data storage means for browsing multimedia data according to the parsed DDL type of description scheme or the decoded binary format of description scheme, and browser interface means for outputting the user demands based on the multimedia description scheme stored in the data storage means, and the search result according thereto.

In another aspect of the present invention, the multimedia data searching and browsing apparatus may further include conversion means for converting the description scheme stored in the data storage means for data base, description scheme database of storing the converted description scheme as data base, and query interface means for browsing the multimedia data suitable for a user query from the data base according to the user query through the browser interface means.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram to illustrate the process of a shot segmentation;
FIG. 2 is a diagram to illustrate the structure of the multimedia data searching system of the present invention;
FIG. 3 is a diagram to illustrate one example of the user interface of the multimedia data description scheme production system of the present invention; and
FIG. 4 illustrates one example of the user interface of the browsing system based the multimedia data description scheme of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

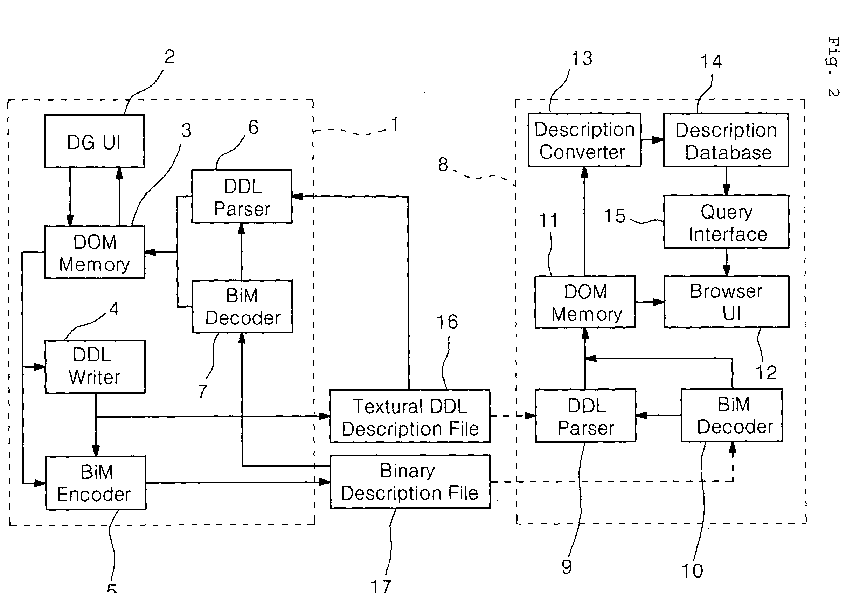

Fig. 2 is a block diagram of a multimedia data searching system along with a description scheme generation system and a browsing system according to one embodiment of the present invention. With reference to Fig. 2, the description scheme generation system 1 includes a user interface 2 to generate a description scheme, a DOM memory 3, a DDL writer 4, a BiM encoder 5, a DDL parser 6, and a BiM decoder 7. The browsing system 8 of Fig. 2 includes a DDL parser 9, a BiM decoder 10, a DOM memory 11, a browser user interface 12, a description scheme converter 13, a description scheme database 14, and query interface 15.

One embodiment of the present invention of the description scheme generation system and the description scheme-based browsing system as shown in Fig. 2 provides a hierarchical video summary function for moving image contents, and illustrate the methods of generating description schemes for browsing, and browsing them based on a key frame and a text. Now, the generating method of a description scheme for the hierarchical video summary function, and the browsing method will be described. Of course, the description scheme generation system and the browsing system of the present invention are not limited to a hierarchical video summary technique, and can be applied to the multimedia content description scheme generating and browsing method to meet the MPEG-7 by expanding or applying the system of the present invention.

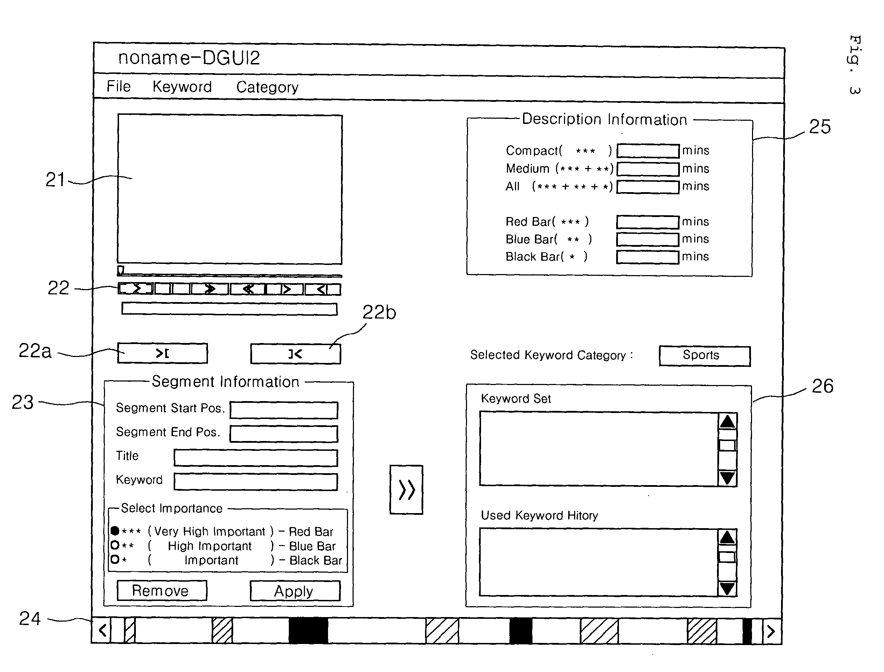

The user interface 2 is the interface (DG UI: Description Generation User Interface) between the description scheme generation system 1 and a user, and one example of the interface display is illustrated in Fig. 3. The DOM memory 3 is 'Document Object Model Memory', and provides an interface environment to store the data between the user interface 2 and the system temporarily. The DDL writer (Description Definition Language Writer) 4 converts the description scheme for multimedia data into a DDL type with connected to the DOM memory 3, and generates a textural DDL description file (Textural DDL Description File) 16. The BiM encoder (Binary format of MPEG-7 Encoder) 5 converts the description scheme for multimedia data into a binary format of a description scheme with connected to the DOM memory 3, and generates a BiM file (Binary Description File) 17.

Fig. 3 illustrates one example of the user interface 2 to generate the description scheme. The user interface 2 includes a display window 21 to display multimedia data, a key 22 to control the display of the multimedia data, a segment information input part 23 to input and select the segment information, a segment summary viewer 24 to display the segment summary information of the multimedia data, a description scheme display part 25 of multimedia data, a key word processing part 26 to select key words, etc. A menu such as file, key word, and category is operated by a full-down way, and each may have its own subordinate menu.

The generation, the edit, and the storage of multimedia data (one content) by the multimedia data description scheme generation system of Fig. 2, and the interface of Fig. 3 can be done as follows.

File Open: A file open of multimedia data or description scheme is offered. In case that multimedia data is selected, a new description scheme file is produced, and in case that the BiM file 17 having a textural DDL file 16 and a MPEG-7 BiM format is selected, a description scheme can be checked. The DDL file 16 is parsed by the DDL parser 6 and is open by the DOM memory 3 as an interface, and the BiM file 17 is decoded by the BiM decoder 7 and is open by the DOM memory 3 as an interface. Or, in some cases, the BiM file 17 may be decoded in the BiM decoder 7, and can be open after converted into a DDL type of data in the DDL parser 6. The display window 21 displays the video scheme for a selected multimedia content in case that the selected multimedia content is A/V. The display control key 22 inputs the user instructions such as replay, fast forward, fast rewind, pause, start and stop, etc. of the multimedia data.

File Save: currently edited description scheme is saved. That is, if the 'File Save' is selected in the user interface 2, the description scheme is saved with the same name and format that the content is open by using the DOM memory 3 as a data interface.

File Save as: the currently edited description scheme is saved as a DDL or a binary format which the user wants. That is, if the 'File Save as' is executed in the user interface 2, the description scheme is saved as a form of a MPEG-7 textual DDL file 16 by the DDL writer 4 by using the DOM memory 3 as a data interface, or is saved as a form of a MPEG-7 of a BiM file 17. For the multimedia content which a user selects, that means the DDL writer 4 converts the description scheme into a DDL type and then, generates/outputs the textual DDL file 16, or the BiM encoder 5 converts the description scheme into a binary format and then, generates/outputs the binary format file 17. In some cases, the BiM encoder 5 can convert/generate the DDL data, which the DDL writer 4 generates, into a BiM format.

Key Word Category Selection: A key word category is selected. The key word processing part 26 selects the key word category of the multimedia content, that is, if a baseball, for example, is selected as a key word category, a key word set for the multimedia content is shown, and a user can select/input the key word of the segment in an editing process.

Generation of Highlight Segment and Addition of Description Scheme: A new highlight segment is made and added to a description scheme. First, by using a start button 22a and an end button 22b of the user interface, the segment start position and the segment end position are input. With the click of the start button 22a, the position value of the part which is currently played in the display window 21 is input in the segment start position of the segment information input part 23, and with the click of the end button, the position value of the part which is currently played in the display window 21 is input in the segment end position of the segment information input part 23.

Additionally, a title of the multimedia content can be also input in the segment information input part 23, and as the method for inputting a key word, there are several ways, i.e., a method of selecting/inputting from a key word set as described above, a method of directly inputting by a user, and a method of inputting in a user key word history. Here, the key word history is the key words included in the description scheme which is currently edited, and the selected key word is added to the user key word history. Meantime, by using a select importance unit of the segment information input part 23, the importance degree of the segment is chosen from three different levels, i.e. Very High Importance, High Importance, and Importance. With the click of a subsidiary button, the edited segment is added to the description information. The segment description scheme input as described above is generated into a DDL file 16 by the DDL writer 4, or is generated into a BiM file 17 by the BiM encoder 5.

Content Modification of Highlight Segment In Highlight Information: If a segment in the segment summary viewer 24 (expressed as a rectangular stick in the drawing) is selected, various information for the segment is displayed in the segment information input part 23, and a to-be-amended content of the information is processed by the same manner with the above process of No. 5, that is, the generation of the highlight segment and the description scheme addition method.

Removal of Highlight Segment: The highlight segment can be removed from the description scheme. The method of removing the highlight segment from the description scheme is performed by selecting a segment in the segment viewer 24 and clicking a remove button to remove the information displayed in the segment information input part 23.

Expression of Description Scheme: The information displayed in the description scheme display part 25 includes the time information of the segments which belong to each level in each description scheme. 'Compact' means the overall time of the all segments having a level **0**, and 'Medium' means the overall time of the all segments having levels **0** and **1**, and 'All' means the overall time of the all segments having levels **0**, **1**, **2**. 'Red bar' means the overall time of the all segments having a level 0, and 'Blue bar' means the overall time of the all segments having a level **1**, and 'Black bar' means the overall time of the all segments having a level **2**.

Segment Summary Viewer: The segment summary viewer 24 visually shows the level and the position of each segment included in the description scheme. The transverse axis is the time axis, and the ones designated as stick shapes are the segments, and each level of them is distinguished according to different colors (in the drawing, divided by the form of dark and light degrees). When a specific corresponding segment is selected, the edit and the removal, etc. of the segment information of the selected segment are possible, which was set forth before.

As described above, the description scheme generation system 1 of multimedia data can perform the selection of the multimedia data, the input of the segment information of the selected multimedia data, and the selection, input, edit, storage, etc. of the key word by using the user interface 2 in Fig. 3, and the DDL writer 4 or the BiM encoder 5 automatically generates and outputs as the MPEG-7 textural DDL file 16 or the BiM file 17.

Now herein after, a browsing system 8 is illustrated.

The DDL parser 9 of the browsing system 8 in Fig. 2 parses the input DDL file 16, and stores in the DOM memory 11. The BiM decoder 10 decodes the input BiM file 17, and stores in the DOM memory 11. In some cases, the DDL parser 6 converts the BiM file 17, which is decoded in the BiM decoder 7, into a DDL-type data, and stores in the DOM memory 11. The DDL file stored in the DOM memory 11 or the decoded BiM file is browsed by the browser user interface 12. In the meantime, the DDL file stored in the DOM memory 11 or the decoded BiM file is converted by the description scheme converter 13, and is constructed as the description scheme database 14. The query interface 15 between the description scheme database 14 and the browser user interface 12 performs a query information processing and a search result supplying.

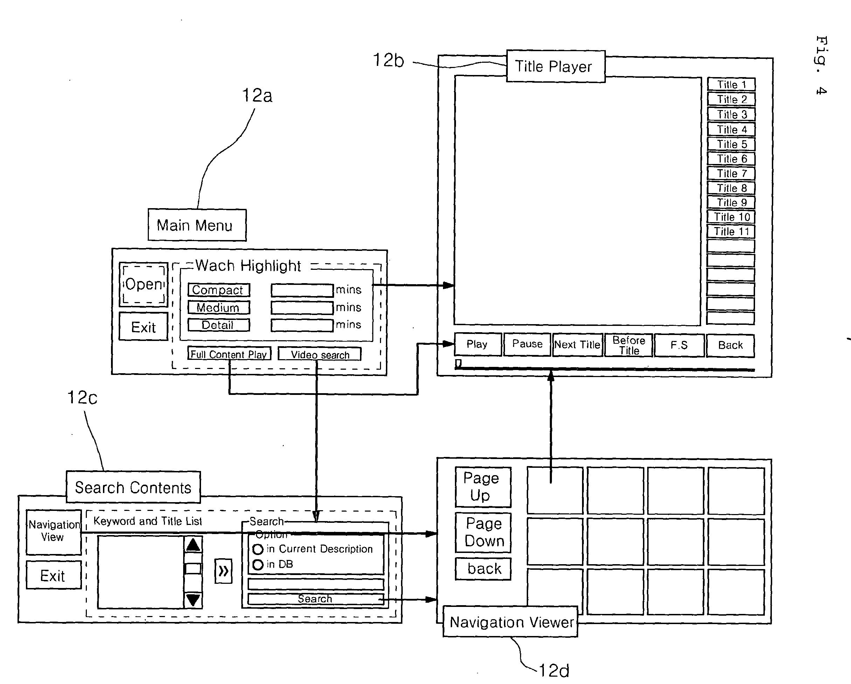

Fig. 4 illustrates one example of the browser user interface 12. There are illustrated a main menu 12a to select a multimedia source and a browsing method, etc., a title player 12b to display a multimedia data, a search content 12c to search a multimedia data, a navigation viewer 12d for a multimedia navigation, etc. The display structure of the browser user interface 12 or its browsing method can be modified in more various shapes, and is not limited into the example in Fig. 4.

Various menu displays or menu bars, etc. can be operated by a full-down manner, and each may have its subordinate menus of lower levels.

By the description scheme-based browsing system of Fig. 2 and the interface of Fig. 4, a browsing method based on the description scheme for a multimedia data (one content) includes the steps of selecting a multimedia source, selecting a browsing method of the selected multimedia source, supplying an interface corresponding to the information for the selected multimedia source and the browsing method, and supplying the browsing results for the selected source based on the browsing interface.

A browsing for multimedia source can be processed as follows based on the browsing interface in Fig. 4.

First, there is opened a file to select a multimedia source. This is done by opening a description scheme (a textural description or a BiM) for a multimedia source. By the file open, the time information of the segments included in the description scheme is displayed, and the displayed time information is designated in a unit of hour: minute: second. As one example of the time information, there are 'Compact' to represent the overall time of the all segments having a level **0**, 'Medium' to represent the overall time of the all segments having levels **0** and **1**, and 'Detail' to represent the overall time of the all segments having levels **0** to **2**.

As described above, by using the above open description scheme, a multi-level highlight view for one content can be done, and the 'Compact' is provided as a default. In view of the method of using the multi-level highlight view, if one of the displayed time information items is selected, the title player 12b based on the segment corresponding to the selected item is operated, and the all corresponding segments are replayed for display. The title of the corresponding segment is displayed on the right side of the title player 12b.

That is, if a user selects 'Compact', the all segments having level **0** are displayed in the title viewer 12b along with the title, and if a user selects 'Medium', the all segments having levels **0** and **1** are displayed in the title viewer 12b along with the title, and a user selects 'Detail', the all segments having levels **0** to **2** are displayed in the title viewer 12b along with the title.

In the meantime, besides the above browsing method by the replay and display of the corresponding segment according to the selection of a multimedia source and a browsing, a browsing method by using the search contents 12c is made possible. This is done by searching a content (highlight segment) matched with a query based on a key word or a title, or a text which a user directly inputs.

That is, with the execution of a content searching, the corresponding search contents 12c are displayed, and a key word or a title is selected from a key word/title list, or a search word is directly input with a text by a user.

The search word allows the selection of a plurality of search words or the condition of a logical sum (OR), and in case that a search subject is the data base 14, and there is no an opened description scheme file, the selection of a search word by using a key word/title is not provided, but the search by the user input text alone is provided.

As a result of the above searching, the navigation viewer 12d is driven, and key frames of the segments having the key word or title matched with the above input search word are displayed in the navigation viewer 12d. The navigation viewer 12d displays a total of twelve key frames simultaneously at one time, i.e. four on the transverse axis and three on the ordinate axis. If a user selects one of the key frames, the segments of the portions, which the above-related key frame represents, are replayed by the title player 12b for display.

Meantime, in case of executing a navigation viewer without inputting a search word, the key frame of the all segments (levels **0** to **2**) included in the currently opened description scheme is displayed in the navigation viewer 12d, and the segments corresponding to the portion, which the selected one of the key frames represents, are replayed by the title player 12b for display.

The browsing method described above can be summarized as follows.

The first one is to execute a searching in a currently opened description scheme, which is divided into two cases, i.e., a case of searching and browsing by using a key word/title existing in the description scheme, and a case of searching and browsing by using a key word defined by a user.

The second one is to execute a searching and browsing the segment matched with a query in the data base 14, which is divided into two cases, i.e., a case of searching and browsing by selecting a key word or a title existing in the description scheme, and a case of searching and browsing in the data base 14 by using a text input by a user.

As described above, the reason to offer a key word or title list in the search content item 12c is to display the list of the all key words and titles included in the currently opened description scheme file, and the all key words and titles displayed herein are utilized to search and browse for the above source.

The present invention provides a system of generating a multimedia data description scheme and along with this, it also produces an effect of automatically generating a metadata suitable for a MPEG 7 standard because it generates the description scheme with a form of a DDL or BiM file when generating the multimedia data description scheme.

In addition, according to the present invention, there is provided a multimedia data searching and browsing system based on the above multimedia data description scheme, and as the multimedia data searching and browsing can be executed based on the description scheme by a form of a DDL or BiM file, the present invention also provides a convenient and efficient searching and browsing environment for a multimedia data source based on the metadata suitable for a MPEG 7 standard.

It will be apparent to those skilled in the art that various modifications and variations can be made in the present invention. Thus, it is intended that the present invention covers the modifications and variations of this invention provided they come within the scope of the appended claims and their equivalents.

## Claims

1. An automatic generating apparatus of multimedia data description scheme comprising:
user interface means for generating a multimedia data description scheme;
data interface means for data interface between the user interface means and the apparatus;
DDL conversion and generation means for generating a DDL type of description scheme for a predetermined multimedia data selected by the user interface means;
binary format conversion and generation means for generating a binary format (BiM) of description scheme for a predetermined multimedia data selected by the user interface means;
DDL parsing means for parsing the DDL type of description scheme and supplying to the data interface means; and
binary format decoding means for decoding the binary format of description scheme and supplying to the data interface means.

2. The automatic generating apparatus of claim 1, wherein the multimedia data description scheme describes hierarchical summary information of the multimedia data.

3. The automatic generating apparatus of claim 1 or 2, wherein the multimedia data description scheme is a description scheme based on the additional description including title/key words for a predetermined scene or portion of the multimedia data.

4. The automatic generating apparatus of at least one of the preceding claims, wherein the user interface means offers the display of the multimedia source, the selection or input of time and key word information of the multimedia source, the supply of segment information, level and location information for the segment and the information to describe the above information to the multimedia data, and the generation of description scheme based on the all information to automatically generate multimedia data description scheme.

5. The automatic generating apparatus of at least one of the preceding claims, wherein the user interface means generates a DDL type or a BiM type of description scheme for the multimedia source, or a BiM type and a DDL type of description scheme for the multimedia source simultaneously to automatically generate the multimedia data description scheme.

6. The automatic generating apparatus of at least one of the preceding claims, wherein the highlight segment and the description scheme for the multimedia data are generated by the user interface means.

7. The automatic generating apparatus of at least one of the preceding claims, wherein the description scheme for the multimedia data is modified or deleted by the user interface means.

8. A multimedia data searching and browsing apparatus comprising:
DDL parsing means for parsing a DDL type of description scheme for multimedia data browsing described as a DDL type of description scheme;
binary format decoding means for decoding a binary format of description scheme for multimedia data browsing described as a binary format of description scheme;
data storage means for browsing multimedia data according to the parsed DDL type of description scheme or the decoded binary format of description scheme; and
browser interface means for outputting the user demands based on the multimedia description scheme stored in the data storage means, and the search result according thereto.

9. The multimedia data searching and browsing apparatus of claim 8, wherein the interface means for searching and browsing comprises means of selecting a multimedia source, means of selecting a browsing method or form for the selected multimedia source, and means of searching and displaying the multimedia according to the selected multimedia source and the browsing method or form.

10. The multimedia data searching and browsing apparatus of claim 8 or 9, wherein the interface means displays the key frame to represent a specific portion of the multimedia data based on the description scheme of the selected multimedia data, and replays and displays the portion which the key frame represents.

11. The multimedia data searching and browsing apparatus of claim 9 or 10, wherein the selection of a browsing method or form by the interface means, and the searching and browsing according thereto are executed by selecting in a key word or title list, or by searching and displaying the segment of the user input key word.

12. The multimedia data searching and browsing apparatus of at least one of claims 9 to 11, wherein the searching and displaying of a segment based on the hierarchical summary by the interface means is performed when the multimedia data description scheme offers the hierarchical summary.

13. The multimedia data searching and browsing apparatus of at least one of claims 8 to 12, further comprising conversion means of converting the description scheme stored in the data storage means for data base, description scheme data base of storing the converted description scheme as data base, and query interface means of browsing the multimedia data suitable for a user query from the data base according to the user query through the browser interface means.

14. The multimedia data searching and browsing apparatus of at least one of claims 8 to 13, wherein the interface means for searching and browsing comprises means of selecting a multimedia source, means of selecting a browsing method or form of the selected multimedia source, and means of searching and displaying the multimedia according to the selected multimedia source and the browsing method or form.

15. The multimedia data searching and browsing apparatus of at least one of claims 8 to 14, wherein the interface means displays the key frame to represent the highlight segment of the multimedia data based on the description scheme of the selected multimedia data, and replays and displays the portion which the key frame represents.

16. The multimedia data searching and browsing apparatus of at least one of claims 8 to 15, wherein the selection of a browsing method or form by the interface means, and the searching and browsing according thereto are executed by selecting in a key word or title list, or by searching and displaying the segment of the user input key word.

17. The multimedia data searching and browsing apparatus of at least one of claims 8 to 16, wherein the searching and displaying of a segment based on the hierarchical summary by the interface means is performed when the multimedia data description scheme offers the hierarchical summary.
